(19) Europäisches Patentamt
European Patent Office
Office européen des brevets

(11) **EP 2 800 190 B1**

(12) **EUROPÄISCHE PATENTSCHRIFT**

(45) Veröffentlichungstag und Bekanntmachung des Hinweises auf die Patenterteilung:
**17.02.2016  Patentblatt 2016/07**

(51) Int Cl.:
***H01M 8/10*** *(2006.01)*   ***H01M 8/04*** *(2006.01)*

(21) Anmeldenummer: **14164660.4**

(22) Anmeldetag: **15.04.2014**

(54) **Verfahren und Regelvorrichtung zum Betreiben einer Brennstoffzelle oder eines Brennstoffzellenstapels**

Method and control device for operating a fuel cell or a fuel cell stack

Procédé et dispositif de réglage destinés au fonctionnement d'une pile à combustible ou d'un empilement de piles à combustible

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2013  EP 13164356**

(43) Veröffentlichungstag der Anmeldung:
**05.11.2014  Patentblatt 2014/45**

(73) Patentinhaber: **Hexis AG**
**8404 Winterthur (CH)**

(72) Erfinder:
• **Mai, Andreas**
**78462 Konstanz (DE)**
• **Kuratli, Hanspeter**
**8610 Uster (CH)**

(74) Vertreter: **Intellectual Property Services GmbH**
**Langfeldstrasse 88**
**8500 Frauenfeld (CH)**

(56) Entgegenhaltungen:
**WO-A2-2005/004261      JP-A- H11 195 423**
**US-A1- 2010 151 287      US-A1- 2010 173 212**

**Beschreibung**

Die Erfindung betrifft ein Verfahren zum Betreiben einer Brennstoffzelle oder eines Brennstoffzellenstapels gemäss Oberbegriff von Anspruch 1.

Brennstoffzellen, insbesondere Hochtemperatur-Brennstoffzellen des SOFC-Typs ("Solid Oxid Fuel Cell") ermöglichen eine Nutzung der Energie eines Brennstoffs durch Energieumwandlung. Dabei können sowohl elektrische Energie, die aufgrund elektrochemischer Prozesse erzeugt wird, als auch thermische Energie, die in Form von heissen Abgasen der Prozesse anfällt, genutzt werden. Es werden gasförmige Ströme zweier Edukte getrennt durch die Zellen geführt. Das erste Edukt, das insbesondere Umgebungsluft ist, enthält oxidierende Komponenten, das zweite Edukt reduzierende Komponenten. Mit Vorteil wird als zweites Edukt ein Methan enthaltendes Gas (z. B. Erdgas) verwendet, das vor dem Eintritt in die Zellen durch einen Reformer geführt und dort beispielsweise mittels einer zusätzlichen Einspeisung von Wasser und gegebenenfalls Luft und unter Zufuhr von Prozesswärme in die reduzierenden Komponenten Wasserstoff und Kohlenmonoxid umgewandelt wird. Als Quelle für die im Reformer benötigte Prozesswärme kann mit Vorteil das heisse Abgas verwendet werden.

Ein Verfahren zum Betreiben einer Brennstoffzellenbatterie ist beispielsweise aus Dokument EP1 205 993 A1 bekannt. In diesem Verfahren wird eine vom Leistungsbedarf abhängige Regelung der Brennstoffzellenbatterie beschrieben.

In der Praxis werden Brennstoffzellen und Brennstoffzellenstapel meist mit konstanter Betriebstemperatur und, solange der Leistungsbedarf und die Gaszusammensetzung nicht ändert, mit konstantem Brenngasfluss betrieben. Darüber hinaus erfolgt der Betrieb in der Regel in der Nähe der für einen gegebenen Brenngasfluss erzielbaren elektrischen Maximalleistung, da dort die Brenngasausnutzung am besten ist.

Der Betrieb bei konstanter Betriebstemperatur und konstantem Brenngasfluss ist, wie nachfolgend gezeigt wird, nicht optimal.

Der Innenwiderstand einer Brennstoffzelle oder eines Brennstoffzellenstapels und die damit verbundenen elektrischen Verluste sinken mit steigender Temperatur. Andererseits ist der theoretische Wirkungsgrad $\eta_{theor.}$ bei Innenwiderstand 0 auf Grund der nachfolgenden Gleichung [1] bei tieferen Temperaturen höher.

$$\eta_{theor.} = \frac{\Delta G}{\Delta H} = \frac{\Delta H - T \Delta S}{\Delta H} \qquad [1]$$

wobei

G = Gibbs'sche Energie
H = Enthalpie
T = Temperatur
S = Entropie        ist.

Da die Temperatureinflüsse auf den Innenwiderstand und auf den theoretischen Wirkungsgrad gegenläufig sind, gibt es eine optimale Betriebstemperatur, die zusätzlich vom Innenwiderstand abhängt.

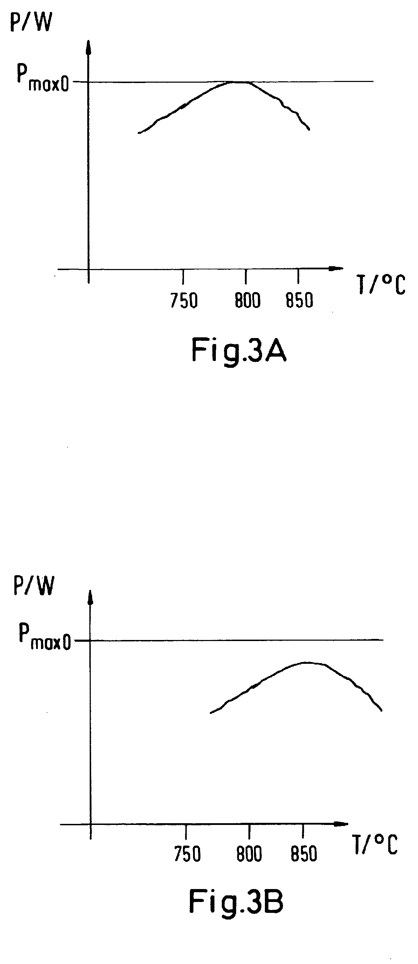

Fig. 3A zeigt einen typischen Verlauf der abgegebenen elektrischen Leistung P in Funktion der Betriebstemperatur T für eine Brennstoffzelle oder einen Brennstoffzellenstapel im Neuzustand bei gegebenem Brenngasfluss. Das Maximum $P_{max0}$ der abgegebenen elektrischen Leistung ist deutlich erkennbar.

Verursacht durch Materialdegradation (Alterung) nimmt der Innenwiderstand der Brennstoffzelle beziehungsweise des Brennstoffzellenstapels im Laufe der Zeit zu, und die optimale Betriebstemperatur verschiebt sich mit der Zeit zu höheren Temperaturen.

Fig. 3B zeigt einen typischen Verlauf der abgegebene elektrische Leistung P in Funktion der Betriebstemperatur T für eine Brennstoffzelle oder einen Brennstoffzellenstapel nach 20'000 h Betriebszeit bei einer Betriebstemperatur von 750 °C und konstant gehaltenem Brenngasfluss. Das Maximum der abgegebenen elektrischen Leistung ist gegenüber dem Maximum $P_{max0}$ im Neuzustand der Brennstoffzelle oder des Brennstoffzellenstapels gesunken und hat sich im Vergleich mit dem in Fig. 3A gezeigten Verlauf der Leistung zu höheren Betriebstemperaturen hin verschoben.

Zusätzlich hängt auch die Materialdegradation von der Betriebstemperatur ab. Bei tieferen Temperaturen ist die Materialdegradation zwar geringer, dafür ist der Innenwiderstand in Folge der tiefern Temperatur höher, so dass sich die Materialdegradation stärker bemerkbar macht.

Neben den genannten Auswirkungen auf den Innenwiderstand und damit auf den elektrischen Wirkungsgrad besteht eine weitere störende Auswirkung der Materialdegradation darin, dass der Benutzer im Laufe der Zeit mit einer Abnahme der von der Brennstoffzelle oder dem Brennstoffzellenstapel abgegebenen elektrischen Leistung konfrontiert ist.

Die oben beschriebenen Zusammenhänge bleiben grösstenteils unberücksichtigt, wenn die Brennstoffzelle oder der Brennstoffzellenstapel, wie bis anhin üblich, bei konstanter Betriebstemperatur betrieben werden.

Aufgabe der Erfindung ist es, ein Verfahren zum Betreiben einer Brennstoffzelle oder eines Brennstoffzellenstapels zur Verfügung zu stellen, mit dem die Lebensdauer der Brennstoffzelle oder des Brennstoffzellenstapels verlängert und die Auswirkungen der Alterung auf die abgegebene elektrische Leistung vermindert werden kann.

Diese Aufgabe wird erfindungsgemäss durch das in Anspruch 1 definierte Verfahren gelöst.

Das erfindungsgemässe Verfahren zum Betreiben einer Brennstoffzelle oder eines Brennstoffzellenstapels, welche beziehungsweise welcher bei gegebenem Brenngasfluss eine elektrische Maximalleistung, die abhängig von der Betriebstemperatur abgegeben werden kann, sowie eine von der Betriebsdauer abhängige Alterung hat, die bewirkt, dass mit fortschreitender Betriebsdauer der elektrische Innenwiderstand zunimmt, zeichnet sich dadurch aus, dass für eine neue Brennstoffzelle oder für einen neuen Brennstoffzellenstapel ein Anfangswert der Betriebstemperatur vorgegeben wird, der zweckmässigerweise kleiner als die maximal für die Brennstoffzelle oder den Brennstoffzellenstapel spezifizierte Betriebstemperatur ist, und die Brennstoffzelle oder der Brennstoffzellenstapel so geregelt wird, dass die Abnahme der abgegebenen elektrischen Leistung in Folge Alterung teilweise oder ganz kompensiert wird, indem die Betriebstemperatur der Brennstoffzelle oder des Brennstoffzellenstapels mit fortschreitender Alterung erhöht wird. Mit Vorteil wird die Betriebstemperatur mit fortschreitender Alterung solange erhöht wird, bis die maximal für die Brennstoffzelle oder den Brennstoffzellenstapel spezifizierte Betriebstemperatur erreicht ist.

Der Anfangswert der Betriebstemperatur ist vorteilhafterweise kleiner als oder gleich der Betriebstemperatur, bei der die elektrische Maximalleistung erreicht wird. Für SOFC-Brennstoffzellen liegt der Anfangswert der Betriebstemperatur typisch zwischen 740 °C und 800 °C.

Vorteilhafterweise wird eine Obergrenze für die abgegebene elektrische Leistung vorgegeben, wobei diese Obergrenze beispielsweise höchstens 80 % oder höchstens 90 % oder höchstens 95 % der elektrischen Maximalleistung einer neuen Brennstoffzelle oder eines neuen Brennstoffzellenstapels betragen kann.

In einer vorteilhaften Ausführungsform wird die Abnahme der abgegebenen elektrischen Leistung in Folge Alterung kompensiert, indem die elektrische Ausgangsspannung der Brennstoffzelle oder des Brennstoffzellenstapels mit fortschreitender Alterung abgesenkt wird, wobei beispielsweise ein Anfangswert für die Ausgangsspannung vorgegeben werden kann, der höher ist, als der Ausgangsspannungswert, bei dem bei gegebenem Brenngasfluss und gegebener Betriebstemperatur die elektrische Ausgangsleistung maximal wird.

Vorteilhafterweise wird die Ausgangsspannung solange abgesenkt, bis der Ausgangsspannungswert erreicht ist, bei dem bei gegebenem Brenngasfluss und gegebener Betriebstemperatur die elektrische Ausgangsleistung maximal wird.

In einer weiteren vorteilhaften Ausführungsform wird die Abnahme der abgegebenen elektrischen Leistung in Folge Alterung kompensiert, indem der Brenngasfluss mit fortschreitender Alterung erhöht wird, wobei beispielsweise ein Anfangswert für den Brenngasfluss vorgegeben werden kann, der kleiner ist, als der maximal für die Brennstoffzelle oder den Brennstoffzellenstapel spezifizierte Brenngasfluss.

Vorteilhafterweise wird der Brenngasfluss solange erhöht, bis der maximal für die Brennstoffzelle oder den Brennstoffzellenstapel spezifizierte Brenngasfluss erreicht ist.

Die oben beschriebenen Ausführungsformen können in unterschiedlicher Reihenfolge zu zweit oder dritt miteinander kombiniert werden, indem beispielsweise ein Anfangswert für die elektrische Ausgangsspannung vorgegeben wird, der höher ist, als der Ausgangsspannungswert, bei dem bei gegebenem Brenngasfluss und gegebener Betriebstemperatur die elektrische Ausgangsleistung maximal wird, und/oder ein Anfangswert für den Brenngasfluss vorgegeben wird, der kleiner ist, als der maximal für die Brennstoffzelle oder den Brennstoffzellenstapel spezifizierte Brenngasfluss, und ein Anfangswert der Betriebstemperatur vorgegeben wird, der kleiner ist, als die maximal für die Brennstoffzelle oder den Brennstoffzellenstapel spezifizierte Betriebstemperatur,

wobei fallweise in einer ersten Phase die Abnahme der abgegebenen elektrischen Leistung in Folge Alterung kompensiert wird, indem die elektrische Ausgangsspannung abgesenkt wird, bis der Ausgangsspannungswert erreicht ist, bei dem bei gegebenem Brenngasfluss und gegebener Betriebstemperatur die elektrische Ausgangsleistung maximal wird,

wobei fallweise in einer zweiten Phase die Abnahme der abgegebenen elektrischen Leistung in Folge Alterung kompensiert wird, indem der Brenngasfluss erhöht wird, bis der maximal für die Brennstoffzelle oder den Brennstoffzellenstapel spezifizierte Brenngasfluss erreicht ist, und

wobei fallweise in einer dritten Phase die Abnahme der abgegebenen elektrischen Leistung in Folge Alterung kompensiert wird, indem die Betriebstemperatur der Brennstoffzelle oder des Brennstoffzellenstapels erhöht wird, bis die maximal für die Brennstoffzelle oder den Brennstoffzellenstapel spezifizierte Betriebstemperatur erreicht ist.

Unabhängig von der Ausführungsform wird im Betrieb bei Bedarf in zeitlichen Abständen eine Strom-Spannungskennlinie der Brennstoffzelle bzw. des Brennstoffzellenstapels erfasst, deren Steigung ein Minimum hat, und jeweils aus der erfassten Strom-Spannungskennlinie ein Wert für das Minimum der Steigung oder ein mit dem Minimum der Steigung zusammenhängender Wert $R_{min}$ ermittelt, wobei durch eine mathematische Verknüpfung des ermittelten Wertes mit einem vorbestimmten Offsetwert $R_{offset}$, insbesondere durch Addition eines vorbestimmten Offsetwertes zum ermittelten Wert, ein Richtwert für den Betriebspunkt bestimmt und die Ausgangsspannung der Brennstoffzelle oder des Brennstoffzellenstapels unter Verwendung des derart bestimmten Richtwertes geregelt wird.

Vorteilhafterweise wird die Ausgangsspannung der Brennstoffzelle oder des Brennstoffzellenstapels über einen regelbaren Verbraucher oder eine regelbare Stromsenke geregelt, die mit dem Ausgang der Brennstoffzelle oder des Brennstoffzellenstapels verbunden sind.

Es wird zusätzlich eine Regelvorrichtung für eine Brennstoffzelle, einen Brennstoffzellenstapel oder ein Brennstoffzellensystem, beschrieben, die eingerichtet ist, um die Brennstoffzelle bzw. den Brennstoffzellenstapel bzw. das Brennstoffzellensystem mittels eines Verfahrens nach einem der oben beschriebenen Ausführungsformen und -varianten zu steuern und/oder zu regeln.

In eine vorteilhaften Ausführungsform enthält die Regelvorrichtung zusätzlich einen regelbaren Verbraucher oder eine regelbare Stromsenke, die mit dem Ausgang der Brennstoffzelle oder des Brennstoffzellenstapels verbindbar sind, um die Ausgangsspannung der Brennstoffzelle oder des Brennstoffzellenstapels über den regelbaren Verbraucher beziehungsweise die regelbare Stromsenke zu regeln, wobei der regelbare Verbraucher beispielsweise ein Spannungswandler oder ein Wechselrichter sein kann, deren Ausgänge mit einem Stromnetz verbunden werden können, um den in der Brennstoffzelle erzeugten Strom in das Stromnetz einzuspeisen.

Weiter wird eine Brennstoffzelle oder ein Brennstoffzellenstapel mit einer Regelvorrichtung oder Ausführungsform der Regelvorrichtung gemäss oben stehender Beschreibung beschrieben.

Das Verfahren zum Betreiben einer Brennstoffzelle oder eines Brennstoffzellenstapels und die Regelvorrichtung sowie die Brennstoffzelle und der Brennstoffzellenstapel gemäss vorliegender Erfindung haben den Vorteil, dass dank des tieferen Anfangswertes der Betriebstemperatur die Alterung reduziert und die Lebensdauer der Brennstoffzelle und des Brennstoffzellenstapels verlängert werden kann, und dem Benutzer gleichzeitig dank der Regelung, welche die Abnahme der abgegebenen elektrischen Leistung in Folge Alterung teilweise oder ganz kompensiert, über einen Grossteil der Lebensdauer eine im Wesentlichen konstante elektrische Leistung zur Verfügung steht.

Die obige Beschreibung von Ausführungsformen und -varianten dient lediglich als Beispiel. Weitere vorteilhafte Ausführungsformen gehen aus den abhängigen Ansprüchen und der Zeichnung hervor. Darüber hinaus können im Rahmen der vorliegenden Erfindung auch einzelne Merkmale aus den beschriebenen oder gezeigten Ausführungsformen und -varianten miteinander kombiniert werden, um neue Ausführungsformen zu bilden.

Im Folgenden wird die Erfindung an Hand der Ausführungsbeispiele und an Hand der Zeichnung näher erläutert. Es zeigen:

Fig. 1 ein Ausführungsbeispiel eines Brennstoffzellenstapels mit einer Regelvorrichtung gemäss vorliegender Erfindung,

Fig. 2 eine schematische Darstellung eines Ausführungsbeispiels eines Verfahrens gemäss vorliegender Erfindung, und

Fig. 3A, B einen typischen Verlauf der abgegebene elektrische Leistung in Funktion der Betriebstemperatur für eine Brennstoffzelle oder einen Brennstoffzellenstapel im Neuzustand und nach einer vorgegebenen Betriebszeit.

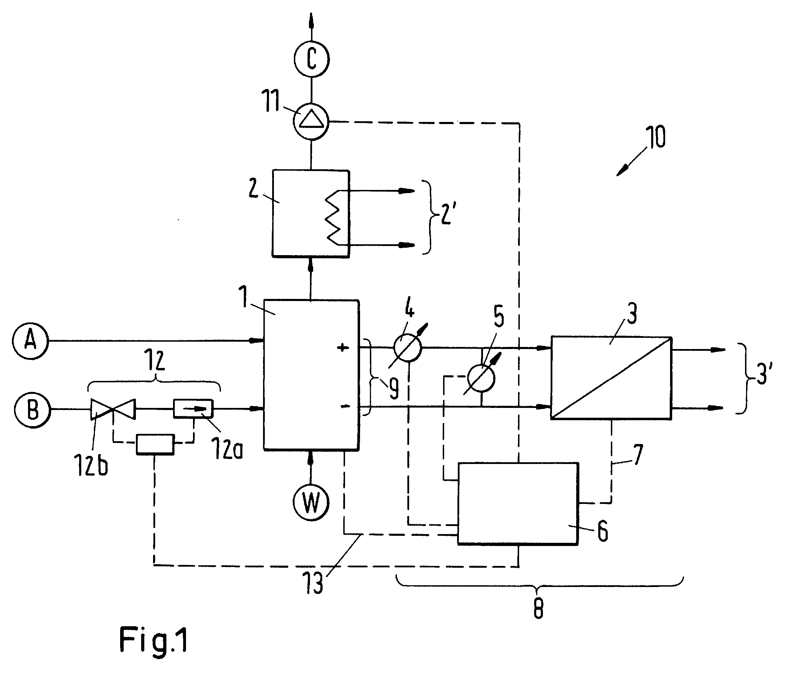

Fig. 1 zeigt ein Ausführungsbeispiel eines Brennstoffzellenstapels 1 mit einer Regelvorrichtung 8 gemäss vorliegender Erfindung. Eine Anordnung eines Brennstoffzellenstapels mit einer Regelvorrichtung wird im Folgenden auch als Brennstoffzellensystem 10 bezeichnet. Der Brennstoffzellenstapel 1 kann beispielsweise aus Hochtemperatur-Brennstoffzellen des SOFC-Typs ("Solid Oxid Fuel Cell") aufgebaut sein, die typisch bei einer Temperatur von 600°C bis 1000°C betrieben werden, und ermöglicht die Nutzung von Energie eines Brennstoffs durch Energieumwandlung. Dabei können sowohl elektrische Energie, die aufgrund elektrochemischer Prozesse erzeugt wird, als auch thermische Energie, die in Form von heissen Abgasen der Prozesse anfällt, genutzt werden. Im Betrieb werden gasförmige Ströme zweier Edukte A, B getrennt durch die Zellen geführt. Das erste Edukt A, das zum Beispiel Umgebungsluft sein kann, enthält oxidierende Komponenten, das zweite Edukt B reduzierende Komponenten.

Vorteilhafterweise wird als zweites Edukt B ein Methan enthaltendes Gas (zum Beispiel Erdgas) verwendet, das vor dem Eintritt in die Zellen durch einen in Fig. 1 nicht gezeigten Reformer geführt und dort beispielsweise mittels einer zusätzlichen Einspeisung von Wasser W und gegebenenfalls Luft und unter Zufuhr von Prozesswärme in die reduzierenden Komponenten Wasserstoff und Kohlenmonoxid umgewandelt wird. Als Quelle für die im Reformer benötigte Prozesswärme kann mit Vorteil das heisse Abgas verwendet werden.

Der Brennstoffzellenstapel 1 ist in der Regel mit einem Wärmetauscher 2 verbunden, in dem den heissen Abgasen aus dem Brennstoffzellenstapel Wärme entzogen werden kann. Der Wärmetauscher 2 ist mit Vorteil mit einem Heizkreis 2' verbunden. Die Abgase C können anschliessend ins Freie geleitet werden oder der Restsauerstoff in den Abgasen kann in einem zusätzlichen Brenner, der in Fig. 1 nicht gezeigt ist, genutzt werden.

Die Brennstoffzelle oder der Brennstoffzellenstapel 1 oder das Brennstoffzellensystem gemäss vorliegender Erfindung enthalten eine Regelvorrichtung 8, die eingerichtet ist, um die Brennstoffzelle bzw. den Brennstoffzellenstapel bzw. das Brennstoffzellensystem nach einem nachfolgend beschriebenen Verfahren gemäss vorliegender Erfindung zu steuern und/oder zu regeln.

Das Verfahren gemäss vorliegender Erfindung zum Betreiben einer Brennstoffzelle oder eines Brennstoffzellenstapels 1, welche beziehungsweise welcher bei gegebenem Brenngasfluss eine elektrische Maximalleistung, die abhängig von der Betriebstemperatur abgegeben werden kann, sowie eine von der Betriebsdauer abhängige Alterung hat, die bewirkt, dass mit fortschreitender Betriebsdauer der elektrische Innenwiderstand zunimmt und, in der Regel, die abgegebene elektrische Leistung abnimmt, zeichnet sich dadurch aus, dass für eine neue Brennstoffzelle oder für einen neuen Brennstoffzellenstapel ein Anfangswert der Betriebstemperatur vorgegeben wird, der zweckmässigerweise kleiner als die maximal für die Brennstoffzelle oder den Brennstoffzellenstapel spezifizierte Betriebstemperatur ist, und die Brennstoffzelle oder der Brennstoffzellenstapel so geregelt wird, dass die Abnahme der abgegebenen elektrischen Leistung in Folge Alterung teilweise oder ganz kompensiert wird, indem die Betriebstemperatur der Brennstoffzelle oder des Brennstoffzellenstapels mit fortschreitender Alterung erhöht wird.

Vorteilhafte Ausführungsformen und -varianten des Verfahrens werden in einem nachfolgenden Teil der Beschreibung erläutert.

Bei Bedarf kann eingangsseitig oder ausgangsseitig des Brennstoffzellenstapels 1 oder des Wärmetauschers 2 ein Gebläse 11 angeordnet sein, mit welchem der Gasdurchfluss, beispielsweise der Durchfluss von Edukt A (z.B. Umgebungsluft), durch den Brennstoffzellenstapel erhöht werden kann.

In einer vorteilhaften Ausführungsform der Brennstoffzelle oder des Brennstoffzellenstapels ist das Gebläse 11 mit der Regelvorrichtung 8 verbunden, welche zum Beispiel über eine Leitung 13 mit einem nicht gezeigten Temperatursensor im Innern des Brennstoffzellenstapels verbunden sein kann, um die Betriebstemperatur des Brennstoffzellenstapels 1 zu erfassen und über eine Anpassung der Gebläsedrehzahl zu steuern und/oder zu regeln.

Weiter kann in mindestens einer der Zuleitungen für die Edukte A, B zum Brennstoffzellenstapel ein Massenstromregler 12 vorgesehen sein, um beispielsweise den Brenngasfluss zu steuern oder zu regeln. Der Massenstromregler kann beispielsweise ein Regelventil 12b und einen Massenstromsensor 12a enthalten, der über eine Steuereinheit mit dem Regelventil verbunden ist.

In einer vorteilhaften Ausführungsform ist die Steuereinheit des Massenflussreglers 12 mit der Regelvorrichtung 8 verbunden, um den Massenfluss zu steuern und/oder zu regeln.

In einer weiteren vorteilhaften Ausführungsform ist die Regelvorrichtung 8 mit einem elektrischen Ausgang 9 des Brennstoffzellenstapels 1 verbunden. Die Regelvorrichtung 8 enthält in dieser Ausführungsform eine Mess- und Regeleinheit 6, die eingerichtet ist, um in zeitlichen Abständen eine Strom-Spannungskennlinie des Brennstoffzellenstapels zu erfassen, deren Steigung ein Minimum hat, beispielsweise mittels eines Stromaufnehmers 4 und eines Spannungsaufnehmers 5, und aus der erfassten Strom-Spannungskennlinie einen Wert für das Minimum der Steigung oder einen mit dem Minimum der Steigung zusammenhängenden Wert $R_{min}$ zu ermitteln, um durch eine mathematische Verknüpfung des ermittelten Wertes mit einem vorbestimmten Offsetwert $R_{offset}$, beispielsweise durch Addition eines vorbestimmten Offsetwertes zum ermittelten Wert oder durch Multiplikation des ermittelten Wertes mit einem Offsetwert, einen Richtwert für den Betriebspunkt zu bestimmen, und um die Ausgangsspannung des Brennstoffzellenstapels 1 unter Verwendung des derart bestimmten Richtwertes zu regeln, beispielsweise mit einem Richtwert oder einem vom Richtwert abgeleiteten Sollwert für die Ausgangsspannung oder den Ausgangsstrom des Brennstoffzellenstapels.

In eine weiteren vorteilhaften Ausführungsform enthält die Regelvorrichtung 8 einen regelbaren Verbraucher oder eine regelbare Stromsenke 3, die mit dem Ausgang 9 der Brennstoffzelle oder des Brennstoffzellenstapels verbindbar sind, um die Ausgangsspannung der Brennstoffzelle oder des Brennstoffzellenstapels 1 über den regelbaren Verbraucher beziehungsweise die regelbare Stromsenke zu regeln. Hierzu kann die Mess- und Regeleinheit 6 beispielsweise über eine Leitung 7 mit dem regelbaren Verbraucher beziehungsweise der regelbaren Stromsenke verbunden sein.

Vorteilhafterweise ist der regelbare Verbraucher 3 ein Spannungswandler oder ein Wechselrichter, deren Ausgänge mit einem Stromnetz 3' verbunden werden können, um den im Brennstoffzellenstapel erzeugten Strom in das Stromnetz einzuspeisen.

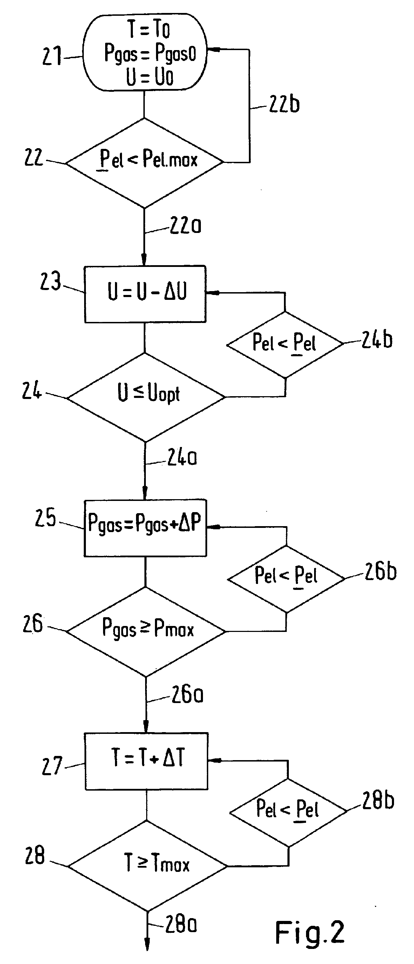

Ein Ausführungsbeispiel eines Verfahrens gemäss vorliegender Erfindung zum Betreiben einer Brennstoffzelle oder eines Brennstoffzellenstapels 1 wird im Folgenden an Hand der Figuren 1 und 2 beschrieben. In dem Verfahren hat die Brennstoffzelle oder der Brennstoffzellenstapel bei gegebenem Brenngasfluss eine elektrische Maximalleistung $P_{el.max}$, die abhängig von der Betriebstemperatur abgegeben werden kann, sowie eine von der Betriebsdauer abhängige Alterung, die bewirkt, dass mit fortschreitender Betriebsdauer der elektrische Innenwiderstand zunimmt und, ohne Gegenmassnahmen, die abgegebene elektrische Leistung $P_{el}$ in der Regel abnimmt. Das Verfahren zeichnet sich dadurch aus, dass für eine neue Brennstoffzelle oder für einen neuen Brennstoffzellenstapel ein Anfangswert $T_0$ der Betriebstemperatur vorgegeben wird, der zweckmässigerweise kleiner als die maximal für die Brennstoffzelle oder den Brennstoffzellenstapel spezifizierte Betriebstemperatur ist, und die Brennstoffzelle oder der Brennstoffzellenstapel 1 so geregelt wird, dass die Abnahme der abgegebenen elektrischen Leistung in Folge Alterung teilweise oder ganz kompensiert wird, indem die Betriebstemperatur T der Brennstoffzelle oder des Brennstoffzellenstapels mit fortschreitender Alterung erhöht wird.

Der Anfangswert $T_0$ der Betriebstemperatur ist mit Vorteil kleiner als oder gleich der Betriebstemperatur, bei der die elektrische Maximalleistung erreicht wird, und liegt typisch zwischen 740 °C und 800 °C.

Vorteilhafterweise wird die Betriebstemperatur T mit fortschreitender Alterung solange erhöht (Schritt 27 in Fig. 2), bis die maximal für die Brennstoffzelle oder den Brennstoffzellenstapel spezifizierte Betriebstemperatur $T_{max}$ erreicht ist. Dies entspricht dem Abbruchkriterium 28 in dem in Fig. 2 gezeigten Ausführungsbeispiel, wobei die Schleife gebildet aus den Schritten 27, 28 und 28b solange durchlaufen wird, bis $T \geq T_{max}$ ist. Die Bedingung $P_{el} < \underline{P}_{el}$ in Schritt 28b steht für eine Warteschleife, welche das Erhöhen der Betriebstemperatur T solange verzögert, bis die Abnahme der abgegebenen elektrischen Leistung in Folge Alterung einen vorgegebenen Leistungswert $\underline{P}_{el}$ unterschritten hat. Wenn das Abbruchkriterium $T \geq T_{max}$ erfüllt ist, kann das Verfahren beispielsweise mit einer Sprunganweisung 28a fortgesetzt werden.

Die Sprunganweisung 28a kann beispielsweise einen Alarm auslösen, der darauf hinweist, dass der Brennstoffzellenstapel 1 in einer vorgegebenen Frist ausgewechselt werden muss.

Vorteilhafterweise wird eine Obergrenze $\underline{P}_{el}$ für die abgegebene elektrische Leistung vorgegeben, wobei diese Obergrenze beispielsweise höchstens 80 % oder höchstens 90 % oder höchstens 95 % der elektrischen Maximalleistung einer neuen Brennstoffzelle oder eines neuen Brennstoffzellenstapels betragen kann (Bedingung 22 in Fig. 2).

In einer vorteilhaften Ausführungsform wird die Abnahme der abgegebenen elektrischen Leistung in Folge Alterung kompensiert, indem die elektrische Ausgangsspannung U der Brennstoffzelle oder des Brennstoffzellenstapels mit fortschreitender Alterung abgesenkt wird, wobei beispielsweise ein Anfangswert $U_0$ für die Ausgangsspannung vorgegeben werden kann, der höher ist, als der Ausgangsspannungswert $U_{opt}$, bei dem bei gegebenem Brenngasfluss und gegebener Betriebstemperatur die elektrische Ausgangsleistung maximal wird.

Vorteilhafterweise wird die Ausgangsspannung U solange abgesenkt (Schritt 23 in Fig. 2), bis der Ausgangsspannungswert $U_{opt}$ erreicht ist, bei dem bei gegebenem Brenngasfluss und gegebener Betriebstemperatur die elektrische Ausgangsleistung maximal wird. Dies entspricht dem Abbruchkriterium 24 in dem in Fig. 2 gezeigten Ausführungsbeispiel, wobei die Schleife gebildet aus den Schritten 23, 24 und 24b solange durchlaufen wird, bis $U \leq U_{opt}$ ist. Die Bedingung $P_{el} < \underline{P}_{el}$ in Schritt 24b steht für eine Warteschleife, welche die Absenkung der Ausgangsspannung U solange verzögert, bis die Abnahme der abgegebenen elektrischen Leistung in Folge Alterung einen vorgegebenen Leistungswert $\underline{P}_{el}$ unterschritten hat. Wenn das Abbruchkriterium $U \leq U_{opt}$ erfüllt ist, kann das Verfahren beispielsweise mit einer Sprunganweisung 24a fortgesetzt werden.

In einer weiteren vorteilhaften Ausführungsform wird die Abnahme der abgegebenen elektrischen Leistung in Folge Alterung kompensiert, indem der Brenngasfluss $P_{gas}$ mit fortschreitender Alterung erhöht wird, wobei beispielsweise ein Anfangswert $P_{gas0}$ für den Brenngasfluss vorgegeben werden kann, der kleiner ist, als der maximal für die Brennstoffzelle oder den Brennstoffzellenstapel spezifizierte Brenngasfluss $P_{max}$.

Vorteilhafterweise wird der Brenngasfluss $P_{max}$ solange erhöht (Schritt 25 in Fig. 2), bis der maximal für die Brennstoffzelle oder den Brennstoffzellenstapel spezifizierte Brenngasfluss $P_{max}$ erreicht ist. Dies entspricht dem Abbruchkriterium 26 in dem in Fig. 2 gezeigten Ausführungsbeispiel, wobei die Schleife gebildet aus den Schritten 25, 26 und 26b solange durchlaufen wird, bis $P_{gas} \geq P_{max}$ ist. Die Bedingung $P_{el} < \underline{P}_{el}$ in Schritt 26b steht für eine Warteschleife, welche das Erhöhen des Brenngasflusses $P_{gas}$ solange verzögert, bis die Abnahme der abgegebenen elektrischen Leistung in Folge Alterung einen vorgegebenen Leistungswert $\underline{P}_{el}$ unterschritten hat. Wenn das Abbruchkriterium $P_{gas} \geq P_{max}$ erfüllt ist, kann das Verfahren beispielsweise mit einer Sprunganweisung 26a fortgesetzt werden.

Die oben beschriebenen Ausführungsformen und - varianten können in unterschiedlicher Reihenfolge zu zweit oder dritt miteinander kombiniert werden, indem beispielsweise ein Anfangswert $U_0$ für die elektrische Ausgangsspannung U vorgegeben wird, der höher ist, als der Ausgangsspannungswert $U_{opt}$, bei dem bei gegebenem Brenngasfluss und gegebener Betriebstemperatur die elektrische Ausgangsleistung maximal wird, und/oder ein Anfangswert $P_{gas0}$ für den Brenngasfluss $P_{gas}$ vorgegeben wird, der kleiner ist, als der maximal für die Brennstoffzelle oder den Brennstoffzellenstapel spezifizierte Brenngasfluss $P_{max}$, und ein Anfangswert $T_0$ der Betriebstemperatur T vorgegeben wird, der kleiner ist, als die maximal für die Brennstoffzelle oder den Brennstoffzellenstapel spezifizierte Betriebstemperatur $T_{max}$ (Schritt 21 in Fig. 2),

wobei fallweise in einer ersten Phase die Abnahme der abgegebenen elektrischen Leistung in Folge Alterung kompensiert wird, indem die elektrische Ausgangsspannung U abgesenkt wird, bis der Ausgangsspannungswert $U_{opt}$ erreicht ist, bei dem bei gegebenem Brenngasfluss und gegebener Betriebstemperatur die elektrische Ausgangsleistung maximal wird, wobei fallweise in einer zweiten Phase die Abnahme der abgegebenen elektrischen Leistung in Folge Alterung kompensiert wird, indem der Brenngasfluss $P_{gas}$ erhöht wird, bis der maximal für die Brennstoffzelle oder den Brennstoffzellenstapel spezifizierte Brenngasfluss $P_{max}$ erreicht ist, und wobei fallweise in einer dritten Phase die Abnahme der abgegebenen elektrischen Leistung in Folge Alterung kompensiert wird, indem die Betriebstemperatur T der Brennstoffzelle oder des Brennstoffzellenstapels erhöht wird, bis die maximal für die Brennstoffzelle oder den Brennstoffzellenstapel spezifizierte Betriebstemperatur $T_{max}$ erreicht ist.

Unabhängig von der Ausführungsform kann im Betrieb bei Bedarf in zeitlichen Abständen eine Strom-Spannungskennlinie der Brennstoffzelle bzw. des Brennstoffzellenstapels erfasst werden, deren Steigung ein Minimum hat, und jeweils aus der erfassten Strom-Spannungskennlinie ein Wert für das Minimum der Steigung oder ein mit dem Minimum der Steigung zusammenhängender Wert $R_{min}$ ermittelt werden, wobei durch eine mathematische Verknüpfung des ermittelten Wertes mit einem vorbestimmten Offsetwert $R_{offset}$, beispielsweise durch Addition eines vorbestimmten Offsetwertes zum ermittelten Wert oder durch Multiplikation mit einem vorbestimmten Offsetwert, ein Richtwert für den Betriebspunkt bestimmt und die Ausgangsspannung der Brennstoffzelle oder des Brennstoffzellenstapels unter Verwendung des derart bestimmten Richtwertes geregelt wird

Vorteilhafterweise wird auf diese Weise ein Richtwert für die Ausgangsspannung U bestimmt, wobei der derart bestimmte Richtwert als Näherung für den Ausgangsspannungswert $U_{opt}$ verwendet werden kann, bei dem bei gegebenem Brenngasfluss und gegebener Betriebstemperatur die elektrische Ausgangsleistung maximal wird.

In einervorteilhaften Ausführungsvarianten wird die Brennstoffzelle oder der Brennstoffzellenstapel spannungsgeführt, d.h. mit einem Sollwert für die Zellspannung oder die Ausgangsspannung geregelt, der grösser oder gleich dem oben bestimmten Richtwert ist.

Der Wert für das Minimum der Steigung kann beispielsweise der Wert des Innenwiderstandes oder des flächenbezogenen Innenwiderstandes, im Englischen Area Specific Resistance oder ASR genannt, der Brennstoffzelle oder des Brennstoffzellenstapels im Minimum der Steigung sein, oder der mit dem Minimum der Steigung zusammenhängende Wert $R_{min}$ kann fallweise mit dem Wert des Innenwiderstandes oder des flächenbezogenen Innenwiderstandes der Brennstoffzelle oder des Brennstoffzellenstapels im Minimum der Steigung verknüpft sein. Der flächenbezogene Innenwiderstand ASR berechnet sich aus dem Innenwiderstand einer Brennstoffzelle, indem der Innenwiderstand mit der elektrochemisch aktiven Fläche der Brennstoffzelle multipliziert wird, beziehungsweise indem der Innenwiderstand einer Wiederholeinheit eines Brennstoffzellenstapels der elektrochemisch aktiven Fläche einer Wiederholeinheit multipliziert wird.

Mit Vorteil wird der Wert für das Minimum der Steigung oder der mit dem Minimum der Steigung zusammenhängende Wert $R_{min}$ mathematisch aus der Strom-Spannungskennlinie ermittelt, beispielsweise numerisch oder durch mathematische Ableitung der Strom-Spannungskennlinie.

In einer weiteren vorteilhaften Ausführungsform wird im Betrieb nach mindestens 200 h oder mindestens 500 h oder mindestens 1000 h oder alle 200 h oder 500 h oder alle 1000 h eine Strom-Spannungskennlinie der Brennstoffzelle bzw. des Brennstoffzellenstapels erfasst wird und aus der erfassten Strom-Spannungskennlinie der Richtwert neu bestimmt wird.

Vorteilhafterweise wird die Ausgangsspannung der Brennstoffzelle oder des Brennstoffzellenstapels 1 über einen regelbaren Verbraucher oder eine regelbare Stromsenke 3, die mit dem Ausgang 9 der Brennstoffzelle oder des Brennstoffzellenstapels verbunden sind, geregelt, wobei der regelbare Verbraucher 3 beispielsweise ein Spannungswandler oder ein Wechselrichter sein kann, deren Ausgänge 3' mit einem Stromnetz verbunden werden können, um den in der Brennstoffzelle bzw im Brennstoffzellenstapel erzeugten Strom in das Stromnetz einzuspeisen.

Das Verfahren und die Regelvorrichtung zur Regelung einer Brennstoffzelle oder eines Brennstoffzellenstapels sowie die Brennstoffzelle und der Brennstoffzellenstapel gemäss vorliegender Erfindung haben den Vorteil, dass dank des tieferen Anfangswertes der Betriebstemperatur die Alterung reduziert und die Lebensdauer der Brennstoffzelle und des Brennstoffzellenstapels verlängert werden kann. Zudem können die Brennstoffzelle bzw. der Brennstoffzellenstapel sicher betrieben werden, selbst wenn die Betriebsbedingungen im Laufe der Zeit ändern. Ein weiterer Vorteil besteht darin, dass dem Benutzer dank der im Verfahren verwendeten Regelung über einen Grossteil der Lebensdauer eine im Wesentlichen konstante elektrische Leistung zur Verfügung steht.

## Patentansprüche

1. Verfahren zum Betreiben einer Brennstoffzelle oder eines Brennstoffzellenstapels (1), welche beziehungsweise welcher bei gegebenem Brenngasfluss eine elektrische Maximalleistung, die abhängig von der Betriebstemperatur abgegeben werden kann, sowie eine von der Betriebsdauer abhängige Alterung hat, die bewirkt, dass mit fortschreitender Betriebsdauer der elektrische Innenwiderstand zunimmt, **gekennzeichnet dadurch, dass** in dem Verfahren für eine neue Brennstoffzelle oder für einen neuen Brennstoffzellenstapel ein Anfangswert ($T_0$) der Betriebstemperatur vorgegeben wird, der kleiner ist als die maximal für die Brennstoffzelle oder den Brennstoffzellenstapel spezifizierte Betriebstemperatur ($T_{max}$), und die Brennstoffzelle oder der Brennstoffzellenstapel (1) so geregelt wird, dass die Abnahme der abgegebenen elektrischen Leistung in Folge Alterung teilweise oder ganz kompensiert wird, indem die Betriebstemperatur (T) der Brennstoffzelle oder des Brennstoffzellenstapels mit fortschreitender Alterung erhöht wird.

2. Verfahren nach Anspruch 1, wobei der Anfangswert ($T_0$) der Betriebstemperatur kleiner als oder gleich der Betriebstemperatur ist, bei der die elektrische Maximalleistung erreicht wird, und wobei der Anfangswert ($T_0$) der Betriebstemperatur insbesondere zwischen 740 °C und 800 °C liegt.

3. Verfahren nach einem der Ansprüche 1 oder 2, wobei die Betriebstemperatur (T) mit fortschreitender Alterung solange erhöht wird, bis die maximal für die Brennstoffzelle oder den Brennstoffzellenstapel spezifizierte Betriebstemperatur($T_{max}$) erreicht ist.

4. Verfahren nach einem der Ansprüche 1 bis 3, wobei eine Obergrenze für die abgegebene elektrische Leistung (P) vorgegeben wird, und wobei diese Obergrenze insbesondere höchstens 80 % oder höchstens 90 % oder höchstens 95 % der elektrischen Maximalleistung einer neuen Brennstoffzelle oder eines neuen Brennstoffzellenstapels beträgt.

5. Verfahren nach einem der Ansprüche 1 bis 4, wobei die Abnahme der abgegebenen elektrischen Leistung in Folge Alterung kompensiert wird, indem die elektrische Ausgangsspannung (U) der Brennstoffzelle oder des Brennstoffzellenstapels (1) mit fortschreitender Alterung abgesenkt wird, und wobei insbesondere ein Anfangswert ($U_0$) für die Ausgangsspannung vorgegeben wird, der höher ist, als der Ausgangsspannungswert ($U_{opt}$), bei dem bei gegebenem Brenngasfluss und gegebener Betriebstemperatur die elektrische Ausgangsleistung maximal wird.

6. Verfahren nach Anspruch 5, wobei die Ausgangsspannung (U) solange abgesenkt wird, bis der Ausgangsspannungswert ($U_{opt}$) erreicht ist, bei dem bei gegebenem Brenngasfluss und gegebener Betriebstemperatur die elektrische Ausgangsleistung maximal wird.

7. Verfahren nach einem der Ansprüche 1 bis 6, wobei die Abnahme der abgegebenen elektrischen Leistung in Folge Alterung kompensiert wird, indem der Brenngasfluss ($P_{gas}$) mit fortschreitender Alterung erhöht wird, und wobei insbesondere ein Anfangswert ($P_{gas0}$) für den Brenngasfluss vorgegeben wird, der kleiner ist, als der maximal für die Brennstoffzelle oder den Brennstoffzellenstapel spezifizierte Brenngasfluss ($P_{max}$).

8. Verfahren nach Anspruch 7, wobei der Brenngasfluss ($P_{gas}$) solange erhöht wird, bis der maximal für die Brennstoffzelle oder den Brennstoffzellenstapel spezifizierte Brenngasfluss ($P_{max}$) erreicht ist.

9. Verfahren nach einem der vorangehenden Ansprüche, wobei ein Anfangswert ($U_0$) für die elektrische Ausgangsspannung vorgegeben wird, der höher ist, als der Ausgangsspannungswert ($U_{opt}$), bei dem bei gegebenem Brenngasfluss und gegebener Betriebstemperatur die elektrische Ausgangsleistung maximal wird, und ein Anfangswert ($P_{gas0}$) für den Brenngasfluss vorgegeben wird, der kleiner ist, als der maximal für die Brennstoffzelle oder den Brennstoffzellenstapel spezifizierte Brenngasfluss ($P_{max}$), und ein Anfangswert ($T_0$) der Betriebstemperatur vorgegeben wird, der kleiner ist, als die maximal für die Brennstoffzelle oder den Brennstoffzellenstapel spezifizierte Betriebstemperatur ($T_{max}$), wobei in einer ersten Phase die Abnahme der abgegebenen elektrischen Leistung in Folge Alterung kompensiert wird, indem die elektrische Ausgangsspannung (U) abgesenkt wird, bis der Ausgangsspannungswert ($U_{opt}$) erreicht ist, bei dem bei gegebenem Brenngasfluss und gegebener Betriebstemperatur die elektrische Ausgangsleistung maximal wird,
wobei in einer zweiten Phase die Abnahme der abgegebenen elektrischen Leistung in Folge Alterung kompensiert wird, indem der Brenngasfluss ($P_{gas}$) erhöht wird, bis der maximal für die Brennstoffzelle oder den Brennstoffzellenstapel spezifizierte Brenngasfluss ($P_{max}$) erreicht ist, und
wobei in einer dritten Phase die Betriebstemperatur (T) der Brennstoffzelle oder des Brennstoffzellenstapels erhöht wird, bis die maximal für die Brennstoffzelle oder den Brennstoffzellenstapel spezifizierte Betriebstemperatur ($T_{max}$) erreicht ist.

10. Verfahren nach einem der vorangehenden Ansprüche, wobei im Betrieb in zeitlichen Abständen eine Strom-Spannungskennlinie der Brennstoffzelle bzw. des Brennstoffzellenstapels erfasst wird, deren Steigung ein Minimum hat, und jeweils aus der erfassten Strom-Spannungskennlinie ein Wert für das Minimum der Steigung oder ein mit dem Minimum der Steigung zusammenhängender Wert ($R_{min}$) ermittelt wird, und wobei durch eine mathematische Verknüpfung des ermittelten Wertes mit einem vorbestimmten Offsetwert ($R_{offset}$), insbesondere durch Addition eines vorbestimmten Offsetwertes zum ermittelten Wert, ein Richtwert für den Betriebspunkt bestimmt und die Ausgangsspannung der Brennstoffzelle oder des Brennstoffzellenstapels unter Verwendung des derart bestimmten Richtwertes geregelt wird.

11. Verfahren nach einem der vorangehenden Ansprüche, wobei die Ausgangsspannung (U) der Brennstoffzelle oder des Brennstoffzellenstapels über einen regelbaren Verbraucher (3) oder eine regelbare Stromsenke, die mit dem Ausgang (9) der Brennstoffzelle oder des Brennstoffzellenstapels (1) verbunden sind, geregelt wird.

**Claims**

1. A method of operating a fuel cell or a fuel cell stack (1) which fuel cell or fuel cell stack can output an electrical maximum power dependent on the operating temperature for a given fuel gas flow, and which exhibits aging in dependence on the operating duration which brings about an increase of the electrical internal resistance with progressive operating duration, **characterized in that** in the method, for a new fuel cell or for a new fuel cell stack, a starting value ($T_0$) of the operating temperature is predefined which is smaller than the maximum specified operating temperature ($T_{max}$) for the fuel cell or the fuel cell stack and the fuel cell or the fuel cell stack (1) is regulated such that the decrease of the electrical power output as a consequence of aging is partly or completely compensated **in that** the operating temperature (T) of the fuel cell or of the fuel cell stack is increased with progressive aging.

2. A method in accordance with claim 1, wherein the starting value ($T_0$) of the operating temperature is smaller than or equal to the operating temperature at which the electrical maximum power is achieved and wherein the starting value ($T_0$) of the operating temperature in particular lies between 740°C and 800°C.

3. A method in accordance with one of the claims 1 or 2, wherein the operating temperature (T) is increased with progressive aging for so long until the maximum specific operating temperature ($T_{max}$) is achieved for the fuel cell or the fuel cell stack.

4. A method in accordance with any one of the claims 1 to 3, wherein an upper threshold for the output electric power (P) is predefined; and wherein this upper threshold amounts to in particular at most 80 % or to at most 90 % or to at most 95 % of the electrical maximum power of a new fuel cell or of a new fuel cell stack.

5. A method in accordance with any one of the claims 1 to 4, wherein the decrease of the output electrical power as a consequence of aging is compensated, in that the electrical output voltage (U) of the fuel cell or of the fuel cell stack (1) is reduced with progressive aging; and with in particular a starting value ($U_0$) being predefined for the output voltage which is higher than the output voltage value ($U_{opt}$) at which the electrical output power is maximum for a given fuel gas flow and a given operating temperature.

6. A method in accordance with claim 5, wherein the output voltage (U) is reduced so far until the output voltage value ($U_{opt}$) is achieved at which the electrical output power is maximum for the fuel cell or the fuel cell stack.

7. A method in accordance with any one of the claims 1 to 6, wherein the decrease of the output electrical power as a consequence of aging is compensated, in that the fuel gas flow ($P_{gas}$) is increased with progressive aging; and with in particular a starting value ($P_{gas0}$) being predefined for the fuel gas flow which starting value is smaller than the maximum specified fuel gas flow ($P_{max}$) for the fuel cell or the fuel cell stack.

8. A method in accordance with claim 7, wherein the fuel gas flow ($P_{gas}$) is increased for so long until the maximum specified fuel gas flow ($P_{max}$) is achieved for the fuel cell or the fuel cell stack.

9. A method in accordance with any one of the preceding claims, wherein a starting value ($U_0$) for the electric output voltage is predefined which is larger than the output voltage value ($U_{opt}$), at which, for a given fuel gas flow and a given operating temperature, the electrical output power is maximum; and a starting value ($P_{gas0}$) for the fuel gas flow is predefined which is smaller than the maximum specified fuel gas flow ($P_{max}$) for the fuel cell or the fuel cell stack; and a starting value ($T_0$) of the operating temperature is predefined which is smaller than the maximum specific operating temperature ($T_{max}$) for the fuel cell or the fuel cell stack, wherein in a first phase the decrease of the output electrical power as a consequence of aging is compensated in that the electrical output voltage (U) is decreased up until the output voltage value ($U_{opt}$) is achieved, at which the electrical output power is maximum for a given fuel gas flow and a given operating temperature; wherein, in a second phase, the decrease of the output electrical power as a consequence of aging is compensated in that the fuel gas flow ($P_{gas}$) is increased until the maximum specified fuel gas flow ($P_{max}$) is achieved for the fuel cell or the fuel cell stack; and wherein, in a third phase, the operating temperature (T) of the fuel cell or of the fuel cell stack is increased until the maximum specified operating temperature ($T_{max}$) is achieved for the fuel cell or the fuel cell stack.

10. A method in accordance with any one of the preceding claims, wherein, during operation, a current voltage characteristic line of the fuel cell and/or the fuel cell stack is determined at intervals in time whose gradient has a minimum and a respective value for the minimum of the gradient or a value ($R_{min}$) associated with the minimum of the gradient is determined from the detected current voltage characteristic line, and wherein a point of reference for the operating point is determined by means of a mathematical linking of the determined value to a predetermined offset value are offset, in particular by addition of a predetermined offset value to the detected value, and the output voltage of the fuel cell or of the fuel cell stack is regulated by the so determined point of reference.

11. A method in accordance with any one of the preceding claims, wherein the output voltage (U) of the fuel cell or of the fuel cell stack is regulated via a regulatable consumer (3) or a regulatable current sink which is connected to the output (9) of the fuel cell or of the fuel cell stack (1).

**Revendications**

1. Procédé pour faire fonctionner une pile à combustible ou un empilement de piles à combustible (1), respectivement, qui pour un flux de gaz combustible donné, peut fournir une puissance électrique maximale en fonction de la température de fonctionnement, et dont le vieillissement est fonction de la durée de fonctionnement, ce qui a pour effet que la résistance interne électrique progresse avec la durée de fonctionnement qui augmente, **caractérisé en ce que** dans le procédé pour une nouvelle pile à combustible ou un nouvel empilement de piles à combustible, une valeur initiale ($T_0$) de la température de fonctionnement est prédéterminée, qui est inférieure à la température de fonctionnement maximale ($T_{max}$) spécifiée pour la pile à combustible ou l'empilement de piles à combustible, et la pile à combustible ou l'empilement de piles à combustible (1) est réglé de sorte que la diminution de la puissance électrique fournie en raison du vieillissement est compensée partiellement ou totalement, en ce sens que la température de fonctionnement (T) de la pile à combustible ou de l'empilement de piles à combustible est augmentée au fur et à mesure que le vieillissement progresse.

2. Procédé selon la revendication 1, dans lequel la valeur initiale ($T_0$) de la température de fonctionnement est inférieure ou égale à la température de fonctionnement à laquelle la puissance électrique maximale est obtenue, et dans lequel la valeur initiale ($T_0$) de la température de fonctionnement se situe en particulier entre 740°C et 800°C.

3. Procédé selon la revendication 1 ou 2, dans lequel la température de fonctionnement (T) est augmentée, avec la progression du vieillissement, jusqu'à ce que la température de fonctionnement maximale ($T_{max}$) spécifiée pour la pile à combustible ou l'empilement de piles à combustible soit atteinte.

4. Procédé selon l'une quelconque des revendications 1 à 3, dans lequel une limite supérieure pour la puissance électrique fournie (P) est prédéterminée, et dans lequel cette limite supérieure est en particulier au plus 80 %, ou au plus 90 %, ou au plus 95 % de la puissance électrique maximale d'une nouvelle pile à combustible ou d'un nouvel empilement de piles à combustible.

5. Procédé selon l'une quelconque des revendications 1 à 4, dans lequel la diminution de la puissance électrique fournie en raison du vieillissement est compensée, en ce sens que la tension électrique de sortie (U) de la pile à combustible ou de l'empilement de piles à combustible (1) est abaissée avec la progression du vieillissement, et dans lequel en particulier une valeur initiale ($U_0$) est prédéterminée pour la tension de sortie, qui est supérieure à la valeur de tension de sortie ($U_{opt}$) à laquelle la puissance électrique de sortie est maximale pour un flux de gaz combustible donné et une température de fonctionnement donnée.

6. Procédé selon la revendication 5, dans lequel la tension de sortie (U) est abaissée jusqu'à ce que la valeur de tension de sortie ($U_{opt}$) soit atteinte, à laquelle la puissance électrique de sortie devient maximale pour un flux de gaz combustible donné et une température de fonctionnement donnée.

7. Procédé selon l'une quelconque des revendications 1 à 6, dans lequel la diminution de la puissance électrique fournie en raison du vieillissement est compensée, en ce sens que le flux de gaz combustible ($P_{gas}$) augmente avec la progression du vieillissement, et dans lequel en particulier une valeur initiale ($P_{gas0}$) est prédéterminée pour le flux de gaz combustible, qui est inférieure au flux de gaz combustible maximal ($P_{max}$) spécifié pour la pile à combustible ou l'empilement de piles à combustible.

8. Procédé selon la revendication 7, dans lequel le flux de gaz combustible ($P_{gas}$) est augmenté jusqu'à ce que le flux de gaz combustible maximal ($P_{max}$) spécifié pour la pile à combustible ou l'empilement de piles à combustible soit atteint.

9. Procédé selon l'une quelconque des revendications précédentes, dans lequel une valeur initiale ($U_0$) est prédéfinie

pour la tension électrique de sortie, qui est supérieure à la valeur de tension de sortie ($U_{opt}$) à laquelle, pour un flux de gaz combustible donné et une température de fonctionnement donnée, la puissance électrique de sortie est maximale ; et une valeur initiale ($P_{gas0}$) est prédéfinie pour le flux de gaz combustible, qui est inférieure au flux de gaz combustible maximal ($P_{max}$) spécifié pour la pile à combustible ou l'empilement de piles à combustible, et une valeur initiale ($T_0$) de la température de fonctionnement est prédéfinie, qui est inférieure à la température de fonctionnement maximale ($T_{max}$) spécifiée pour la pile à combustible ou l'empilement de piles à combustible, dans lequel dans une première phase, la diminution de la puissance électrique de sortie en conséquence du vieillissement est compensée, en ce sens que la tension électrique de sortie (U) est abaissée jusqu'à ce que la valeur de tension de sortie ($U_{opt}$) soit atteinte, à laquelle la puissance électrique de sortie est maximale pour un flux de gaz combustible donné et une température de fonctionnement donnée ;

dans lequel, dans une deuxième phase, la diminution de la puissance électrique prédéterminée en conséquence du vieillissement est compensée, en ce sens que le flux de gaz combustible ($P_{gas}$) est augmenté jusqu'à ce que le flux de gaz combustible maximal ($P_{max}$) spécifié pour la pile à combustible ou l'empilement de piles à combustible soit atteint, et

dans lequel, dans une troisième phase, la température de fonctionnement (T) de la pile à combustible ou de l'empilement de piles à combustible est augmentée jusqu'à ce que la température de fonctionnement maximale ($T_{max}$) spécifiée pour la pile à combustible ou l'empilement de piles à combustible soit atteinte.

10. Procédé selon l'une quelconque des revendications précédentes, dans lequel, en fonctionnement, une ligne caractéristique de tension de courant de la pile à combustible ou de l'empilement de piles à combustible est déterminée à des intervalles de temps, dont le gradient a un minimum, et une valeur respective pour le minimum du gradient, ou une valeur ($R_{min}$), associée au minimum du gradient est déterminée à partir de la ligne caractéristique de tension de courant, et dans lequel un point de référence pour le point de fonctionnement est déterminé via un lien mathématique d'un décalage de la valeur déterminée par rapport à une valeur de décalage prédéterminée, en particulier par ajout d'une valeur de décalage prédéterminée à la valeur détectée, et la tension de sortie de la pile à combustible ou de l'empilement de piles à combustible est régulée par le point de référence ainsi déterminé.

11. Procédé selon la revendication 1, dans lequel la tension de sortie (U) de la pile à combustible ou de l'empilement de piles à combustible est régulée par l'intermédiaire d'un consommateur pouvant être régulé (3) ou d'un puits de courant pouvant être régulé qui est connecté à la sortie (9) de la pile à combustible ou de l'empilement de piles à combustible (1).

Fig.1

Fig.2

P/W

$P_{max0}$

750    800    850    T/°C

Fig.3A

P/W

$P_{max0}$

750    800    850    T/°C

Fig.3B

**IN DER BESCHREIBUNG AUFGEFÜHRTE DOKUMENTE**

**In der Beschreibung aufgeführte Patentdokumente**

- EP 1205993 A1